# FASCICULE DE BREVET EUROPEEN

(11) **EP 4 087 828 B1**
(45) Date de publication et mention de la délivrance du brevet: **13.03.2024**
(21) Numéro de dépôt: 21705236.4
(22) Date de dépôt: 05.01.2021
(51) Int. Cl.: C03C 25/28

(54) **PROCÉDÉ DE FABRICATION DE PRODUITS D'ISOLATION À BASE DE LAINE MINÉRALE**
VERFAHREN ZUM HERSTELLEN EINES ISOLIERPRODUKTES BASIEREND AUF STEINWOLLE
METHOD FOR MANUFACTURING INSULATION PRODUCTS BASED ON MINERAL WOOL

(30) Priorité: 09.01.2020 FR 2000151
(43) Date de publication de la demande: 16.11.2022
(73) Titulaire: SAINT-GOBAIN ISOVER, 92400 Courbevoie (FR)
(72) Inventeur: SECK, Mamadou, 60100 CREIL (FR); DELMEE, Mickael, 60130 WAVIGNIES (FR); GUYOT, Pierrick, 92120 MONTROUGE (FR)
(74) Mandataire: Saint-Gobain Recherche
(86) Numéro de dépôt international: PCT/FR2021/050008
(87) Numéro de publication internationale: WO 2021/140295

(56) Documents cités:
- EP-A1- 1 182 177
- US-A1- 2010 192 636

## Description

La présente invention concerne un procédé de fabrication de produits d'isolation à base de laine minérale liée par un liant organique, comprenant la préparation de laine minérale thermodurcissable sèche et non collante, et le thermodurcissement de cette laine minérale, éventuellement après mélange avec de la laine minérale vierge et/ou recyclée ou avec des fibres organiques naturelles.

La fabrication de produits d'isolation à base de laine minérale comprend généralement une étape de fabrication de fibres de verre ou de roche par un procédé de centrifugation de verre fondu ou de roche fondue (fibrage). Les fibres nouvellement formées sont entrainées par un flux d'air chaud vers un tapis convoyeur qui les recueille (formage) et les transporte à travers une étuve de cuisson. Sur le trajet entre le dispositif de centrifugation (fibrage) et le tapis de collecte des fibres, on pulvérise sur les fibres une composition aqueuse de liant thermodurcissable qui subit ensuite dans l'étuve de cuisson une réaction de thermodurcissement à des températures d'environ 200 °C.

Les compositions aqueuses de liant sont des solutions aqueuses diluées, peu visqueuses, de réactifs monomères, de résines oligomères et/ou de polymères. Elles sont pulvérisées sur les fibres minérales encore chaudes, nouvellement formées, au moyen d'une couronne de pulvérisation située en aval du dispositif de centrifugation, à proximité immédiate de ce dernier. EP-1182177 décrit un procédé de fabrication de produits d'isolation à base de laine minérale liée par un liant organique, comprenant les étapes successives suivantes :
- mise à disposition de laine minérale à température ambiante, -l'application, sur la laine minérale, d'une composition aqueuse de liant thermodurcissable, -la mise en forme de la laine minérale thermodurcissable, et -le chauffage de la laine minérale thermodurcissable mise en forme à une température et pendant une durée suffisante pour permettre la condensation des constituants du liant et la formation d'un liant insoluble. US-2010/192636 décrit un procédé de contrôle du niveau de corrosivité d'une solution aqueuse récupérée lors d'un procédé de production d'un matelas de fibres minérales, comprenant notamment le fibrage et la liaison desdites fibres par un liant comprenant un polyacide typiquement du type acrylique, ladite solution aqueuse étant recyclée au moins en partie vers une zone de préparation de ladite résine et/ou une zone de lavage de l'installation de production, ledit procédé se caractérisant en ce qu'on maintient le pH de la solution dans le circuit de recyclage entre des valeurs minimale et maximale par l'introduction dans ledit circuit d'un agent de modification dudit pH telle qu'une base, la quantité introduite ou le débit de l'agent de modification du pH étant ajusté directement en fonction de la quantité ou du débit de liant acide introduit au cours du procédé de fibrage.

Lorsque les fibres sont recueillies et assemblées sous forme de matelas (ou *loft*) sur le tapis collecteur, elles sont collantes et le film de composition de liant qui enveloppe les fibres minérales contient encore de l'eau.

Ce n'est que lorsque le matelas de laine minérale encollée entre dans l'étuve de cuisson thermostatée que l'évaporation de l'eau est parachevée et que la réaction de condensation des réactifs du liant débute.

Une installation de fabrication de produits isolants à base de laine minérale liée par des liants organiques qui fonctionne de la manière décrite ci-dessus (pulvérisation de composition de liant sur les fibres encore chaudes, évaporation partielle de l'eau, formation d'un matelas de fibres collantes, cuisson du matelas de fibres collantes dans l'étuve), comprend nécessairement un système de lavage des installations, en particulier un système de lavage de la chambre de formage et du tapis collecteur. En effet la pégosité élevée des fibres encollées, encore humides, véhiculées dans un flux d'air chaud entre le dispositif de fibrage et le tapis convoyeur, conduit à l'encrassement des parois de la chambre de formage, du tapis convoyeur et du dispositif d'aspiration situé en dessous de celui-ci.

L'eau de lavage est recyclée en circuit fermé, filtrée, neutralisée et réutilisée pour la fabrication de solutions de liant et pour le lavage des équipements de production. Le système de lavage des installations de production et le recyclage des eaux de lavage en circuit fermé représentent une fraction importante des coûts d'investissement et de fonctionnement d'une installation de production de produits isolants à base de laine minérale liée.

La présente invention a pour but de proposer un procédé de fabrication de produits isolants à base de laine minérale liée par un liant organique qui ne comporte pas d'étape au cours de laquelle des fibres minérales encollées par une composition de liant, partiellement séchées et collantes, sont véhiculées au moyen d'un flux d'air entre le dispositif de fibrage et la zone de formage d'un matelas.

Dans le procédé de fabrication de produits d'isolation de la présente invention, la composition de liant n'est pas appliquée sur des fibres minérales néoformées, encore chaudes, mais sur des fibres minérales à température ambiante (c'est-à-dire en équilibre thermique avec l'environnement qui les entoure). Les fibres minérales encollées sont ensuite séchées à une température suffisamment élevée pour permettre l'évaporation complète ou quasi-complète de l'eau et la disparition du caractère collant des fibres. La température de séchage est toutefois inférieure à la température de début de réticulation des réactifs du liant.

A l'issue de l'étape de séchage mise en oeuvre à une température inférieure à la température de réticulation du liant, on obtient ainsi des fibres minérales entourées d'une couche de liant séché. Le liant séché n'est plus collant. Il est toutefois thermodurcissable, c'est-à-dire il contient les réactifs de liant et est capable de polymériser et/ou de réticuler et de former un liant insoluble. On désignera ci-après indifféremment par les termes « laine minérale thermodurcissable » et « fibres liantes » ces fibres minérales, encollées d'un liant organique, séché, non collant et ayant conservé sa capacité à durcir par réticulation lorsqu'il est chauffé à une température suffisante.

La présente invention est basée sur la découverte que la couche de liant séché, non collant, permettait toujours de lier les fibres minérales entre elles lorsqu'on chauffait un ensemble de fibres à une température suffisante pour déclencher la condensation des réactifs du liant séché.

Dans le procédé de fabrication de laine minérale de la présente invention la laine minérale thermodurcissable est ensuite mise en forme, éventuellement après mélange avec de la laine minérale non-thermodurcissable, et est soumise à une étape de cuisson. Au cours de cette étape de cuisson, le liant séché est d'abord ramolli, voire fondu, ce qui favorise l'adhésion des fibres entre elles, puis les réactifs du liant polymérisent et réticulent de manière à former un liant organique insoluble et infusible.

A aucun moment du procédé de la présente invention la laine minérale fraîchement encollée de la composition aqueuse de liant n'est véhiculée par un flux d'air chaud. Elle n'est donc pas susceptible d'adhérer massivement aux équipements de formage du matelas de laine minérale et le procédé peut fonctionner sans un système d'eaux de lavage fonctionnant en circuit fermé. Dans le procédé de la présente invention la laine minérale encollée de la composition aqueuse de liant est d'abord soumise à un séchage avant d'être transportée, éventuellement mélangée avec d'autres fibres, mise en forme et cuite en étuve.

La présente invention a par donc pour objet un procédé de fabrication de produits d'isolation à base de laine minérale liée par un liant organique, comprenant les étapes successives suivantes :
(a) la mise à disposition de laine minérale à température ambiante,
(b) l'application, sur la laine minérale, d'une composition aqueuse de liant thermodurcissable,
(c) le séchage de la laine minérale imprégnée de composition aqueuse de liant thermodurcissable de manière à obtenir de la laine minérale thermodurcissable,
(d) la mise en forme de la laine minérale thermodurcissable, et
(e) le chauffage de la laine minérale thermodurcissable mise en forme à une température et pendant une durée suffisante pour permettre la condensation des constituants du liant et la formation d'un liant insoluble.

La première étape du procédé consiste donc à mettre à disposition de la laine minérale à température ambiante. Le terme « à température ambiante » ne désigne pas une température ou une fourchette de température particulière, mais signifie que les fibres minérales sont en équilibre thermique avec leur environnement immédiat. Les fibres minérales ne sont donc pas des fibres minérales en cours de refroidissement, sortant de l'étape de fibrage par centrifugation de verre fondu ou de roche fondue. La « température ambiante » est typiquement comprise entre 15 °C et 30 °C, en particulier entre 18 °C et 25 °C.

La laine minérale mise à disposition à l'étape (a) peut être de la laine minérale vierge. Le terme « laine minérale vierge » désigne dans la présente demande de la laine minérale, en particulier de la laine de verre ou de roche, obtenue par centrifugation interne ou externe, dont les fibres ne sont pas liées les unes aux autres au moyen d'un liant organique. Une telle laine minérale vierge est typiquement utilisée en tant que laine à souffler pour l'isolation de combles. Les fibres de laine minérale vierge peuvent être enrobées d'une mince couche d'ensimage ou de lubrifiant.

La laine minérale mise à disposition à l'étape (a) peut également être de la laine minérale recyclée. Le terme « laine minérale recyclée » désigne ici de la laine minérale constituée de fibres minérales portant à leur surface un liant organique insoluble et infusible, déjà réticulé.

Bien entendu la laine minérale mise à disposition à l'étape (a) peut être un mélange de laine minérale vierge et de laine minérale recyclée, en n'importe quelles proportions respectives.

L'étape suivante du procédé de l'invention consiste à appliquer sur la laine minérale vierge et/ou recyclée une composition aqueuse de liant. Il s'agit avantageusement d'une solution aqueuse des composants du liant, capables de réagir les uns avec les autres pour former un réseau polymérique réticulé, insoluble et infusible.

L'application de la composition de liant peut se faire par n'importe quel moyen approprié connu en tant que tel, par exemple par pulvérisation (*spray*)*,* par enduction au rouleau ou par immersion des fibres minérales dans une composition aqueuse de liant.

La composition aqueuse de liant a donc avantageusement une viscosité suffisamment faible pour pouvoir être appliquée sur les fibres minérales par pulvérisation, ou pour permettre l'imprégnation de laine minérale par immersion dans la composition aqueuse de liant.

Comme expliqué ci-avant, au cours de l'étape d'application de la composition aqueuse de liant (étape (b)), la laine minérale est de préférence à température ambiante. Il en va de même pour la composition aqueuse de liant.

La composition aqueuse de liant a avantageusement une teneur en matières solides comprise entre 1 et 10 %, de préférence entre 1,5 et 8 %, et en particulier entre 2 et 7 % en poids.

Après application de la composition aqueuse de liant, la laine minérale encollée est soumise à une étape de séchage (étape (c)) qui a pour but d'évaporer suffisamment d'eau pour rendre les fibres encollées sensiblement non-collantes.

Cette étape de séchage peut être mise en oeuvre par chauffage, par exemple dans une étuve ventilée thermostatée ou encore par irradiation avec un rayonnement infrarouge ou avec des microondes. II est important de veiller à ce que le séchage ne porte pas les fibres de laine minérale à une température trop élevée qui se traduit par le ramollissement du liant séché, voire par un début de réticulation des composants du liant. Une température de chauffage proche du point d'ébullition de l'eau est généralement suffisante.

Le séchage de laine minérale imprégnée de composition aqueuse de liant (étape (c)) est ainsi réalisé de préférence par chauffage à une température comprise entre 60 et 110 °C, en particulier entre 70 et 100 °C. Les fibres de la laine minérale obtenue à l'issue de l'étape de séchage sont entourées d'une gaine de liant organique séché. Lorsque la mouillabilité de la laine vierge/recyclée par la composition aqueuse de liant n'est pas très élevée, la gaine de liant organique peut être irrégulière et des gouttelettes de liant séché peuvent être visibles sous microscope.

La laine minérale obtenue après séchage (étape (c)) est appelée dans la présente demande « laine minérale thermodurcissable ». Ce terme désigne donc la laine minérale formée de fibres minérales portant à leur surface un liant solide sec, soluble dans l'eau, contenant des réactifs qui, lorsqu'ils sont chauffés à une température supérieure à une valeur donnée (température de début de réticulation), sont capables de polymériser et/ou de réticuler et de former un liant insoluble. Les fibres constituant cette laine minérale thermodurcissable sont également appelées ci-après « fibres liantes »

La laine minérale thermodurcissable comprend généralement de 3 à 20 % en poids sec, de préférence de 4 à 18 % en poids sec, en particulier de 5 à 15 % en poids sec, de liant thermodurcissable. Il est important de noter que lorsque la laine minérale mise à disposition à l'étape (a) est de la laine minérale recyclée contenant déjà une certaine fraction de liant organique réticulé, les pourcentages ci-dessus n'englobent pas les quantités de liant organique réticulé présent sur les fibres avant application de la composition de liant. La perte au feu (LOI, *loss on ignition*) de la laine minérale thermodurcissable peut donc être supérieure à la teneur en liant organique séché thermodurcissable.

Dans un mode de réalisation préféré le procédé de la présente invention, comporte en outre, entre l'étape (c) de séchage et l'étape (d) de mise en forme, une étape de mélange de la laine minérale thermodurcissable (fibres liantes) avec de la laine minérale vierge et/ou avec de la laine minérale recyclée et/ou avec des fibres organiques naturelles (fibres non-liantes).

Les fibres organiques naturelles sont des fibres non-thermoplastiques, d'origine végétale ou d'origine animale. Les fibres végétales sont de préférence choisies dans le groupe constitué des fibres lignocellulosiques et des fibres de coton. Les fibres lignocellulosiques sont de préférence choisies parmi les fibres de bois, fibres de chanvre, fibres de lin, fibres de sisal, fibres de coton, fibres de jute, fibres de coco, fibres de raphia, fibres d'abaca, paille de céréales ou paille de riz. Les fibres animales sont de préférence choisies dans le groupe constitué des laines animales, telles que la laine de mouton.

Ce mélange peut en principe être mis en oeuvre par n'importe quel moyen mécanique et/ou pneumatique approprié. Les inventeurs ont constaté que les propriétés mécaniques des produits d'isolation finaux étaient d'autant meilleures que le moyen de mélangeage préservait la longueur des fibres minérales mélangées. En effet, lorsque l'étape de mélangeage aboutit à une réduction importante des dimensions des fibres, cela se traduit par un moindre enchevêtrement des fibres minérales et une moindre résistance en traction des produits finis. Dans un mode de réalisation préféré du procédé de l'invention, le mélange de fibres liantes et de fibres non-liantes est mis en oeuvre au moyen d'un flux d'air comprimé traversant une chambre de turbulences. Un tel dispositif permet en effet d'obtenir des mélanges très réguliers sans réduire excessivement la longueur des fibres.

Lorsque le mélange des deux types de fibres utilise un moyen pneumatique il convient de veiller à ce que le flux d'air comprimé soit à une température suffisamment basse pour empêcher un éventuel ramollissement du liant organique.

En effet, dans un mode de réalisation préféré du procédé de l'invention, le liant organique séché formant la gaine organique entourant les fibres de la laine minérale thermodurcissable a un comportement thermoplastique, c'est-à-dire il se ramollit ou se liquéfie lorsqu'on le chauffe à une certaine température, appelée ci-après « température de ramollissement » ou « température de transition vitreuse », déterminée par analyse calorimétrique différentielle (DSC). Cette température de ramollissement est supérieure à la température de séchage mais inférieure à la température de début de réticulation du liant. Ce ramollissement confère avantageusement une certaine pégosité (*tack*) aux fibres qui deviennent ainsi capables d'adhérer les unes aux autres et également à des fibres minérales non-liantes (laine minérale vierge/recyclée) ou à des fibres organiques naturelles non-liantes, éventuellement présentes. Les inventeurs ont observé que lorsque le liant organique sec se fluidifie suffisamment à chaud, il migre même à partir des fibres de laine minérale thermodurcissable sur des fibres de la laine minérale vierge/recyclée ou sur les fibres organiques naturelles. En inspectant par microscopie optique des produits isolants obtenus par un mélange de 50 % en poids de laine minérale thermodurcissable et 50 % en poids de laine minérale vierge, les inventeurs ont observé la présence de liant organique sur l'ensemble des fibres et non seulement sur la moitié de celles-ci.

Les proportions respectives des fibres minérales thermodurcissables (fibres liantes) et des fibres minérales vierges/recyclées ou les fibres organiques naturelles peuvent varier à l'intérieur de gammes assez larges. Ces gammes dépendent, entre autres, de l'homogénéité du mélange des fibres et de la teneur en liant thermodurcissable des fibres liantes. Plus le mélange est homogène et plus la teneur en liant thermodurcissable des fibres liantes est importante, plus la proportion de fibres vierges/recyclées non-liantes ou de fibres organiques naturelles peut être élevée.

Généralement on mélange 100 parts en poids de laine minérale thermodurcissable avec 10 à 400 parts en poids, de préférence avec 20 à 300 parts en poids, en particulier avec 30 à 200 parts en poids de laine minérale vierge et/ou recyclée (laine minérale non-liante) ou de fibres organiques naturelles.

Dans un mode de réalisation particulièrement avantageux, le procédé de fabrication de produits d'isolation à base de laine minérale liée par un liant organique, comprend donc les sept étapes successives suivantes :
- la mise à disposition de laine minérale à température ambiante,
- l'application, sur la laine minérale, d'une composition aqueuse de liant thermodurcissable,
- le séchage de la laine minérale imprégnée de composition aqueuse de liant thermodurcissable de manière à obtenir de la laine minérale thermodurcissable,
- le mélange de la laine minérale thermodurcissable avec de la laine minérale vierge et/ou recyclée ou avec des fibres organiques naturelles,
- la mise en forme du mélange de laine minérale thermodurcissable et de laine minérale vierge et/ou recyclée ou de fibres organiques naturelles, et
- le chauffage du mélange mis en forme à une température et pendant une durée suffisante pour permettre la réticulation des constituants du liant et la formation d'un liant insoluble.

L'étape de mise en forme de la laine minérale thermodurcissable (ou du mélange de laine minérale thermodurcissable et de laine minérale vierge et/ou recyclée ou de fibres organiques naturelles) est de préférence réalisée par moulage et/ou compression. Le moule utilisé pour le moulage des produits doit être en un matériau capable de résister à la température de l'étape de thermodurcissement. Il doit par ailleurs avoir une structure permettant à l'air chaud de l'étuve de cuisson de pénétrer facilement dans le produit moulé. Le moule peut par exemple être formé d'un grillage métallique en forme de caisson. Le caisson en grillage métallique est de préférence rempli avec un volume de laine minérale thermodurcissable en vrac supérieur à sa contenance et est ensuite fermé par un couvercle en grillage métallique. La laine minérale thermodurcissable se trouve ainsi plus ou moins comprimée en fonction de l'excédent volumique de remplissage. Cet excédent volumique de remplissage du caisson par la laine minérale thermodurcissable est par exemple compris entre 10 % et 150 %, de préférence entre 15 et 100 % et en particulier entre 20 et 80 %.

Lorsque le procédé de la présente invention est un procédé en continu, la mise en forme de la laine minérale thermodurcissable peut se faire par exemple par compression au moyen d'un rouleau situé à l'entrée de l'étuve de cuisson sur un convoyeur.

L'étape de durcissement par chauffage de la laine minérale thermodurcissable mise en forme, à une température et pendant une durée suffisante pour permettre la condensation (polymérisation/réticulation) des constituants du liant et la formation d'un liant insoluble est mise en oeuvre dans des conditions familières à l'homme du métier. Lorsque le procédé est un procédé continu, l'étuve de cuisson est avantageusement identique à l'étuve d'une ligne de fabrication de produits d'isolation de l'état de la technique où l'on fait passer de l'air très chaud sous pression à travers le matelas de laine minérale.

La température de chauffage de l'étape (e) est avantageusement comprise entre 130 °C et 240 °C, de préférence entre 180 °C et 230 °C, en particulier entre 190 °C et 220 °C. La durée de chauffage est avantageusement comprise entre 30 secondes et 15 minutes, de préférence entre 1 minute et 10 minutes, en particulier entre 2 et 8 minutes.

On peut facilement ajuster la masse volumique et l'épaisseur des produits d'isolation à base de laine minérale obtenus par le procédé de la présente invention en faisant varier le taux de compression de la laine minérale thermodurcissable au cours de l'étape de cuisson. Les produits d'isolation ont généralement une masse volumique comprise entre 4 et 150 kg/m³, de préférence entre 5 et 60 kg/m³, en particulier entre 6 et 40 kg/m³. Leur épaisseur est généralement comprise entre 20 mm et 500 mm, avantageusement entre 40 mm et 300 mm, de préférence entre 50 mm et 200 mm, et en particulier entre 60 mm et 150 mm.

Le procédé de fabrication de produits d'isolation à base de laine minérale décrit ci-dessus peut en principe être mis en oeuvre avec n'importe quel liant organique thermodurcissable couramment utilisé dans le domaine des laines minérales.

On peut citer à titre d'exemples de tels liants ceux
- à base de résines résole (phénol-formaldéhyde), de préférence modifiées par de l'urée,
- à base de réactifs de Maillard (sucres réducteurs et amines),
- à base de polymères acryliques et d'agents de réticulation tels que des réactifs polyhydroxylés et polyaminés,
- à base de sucres non-réducteurs et/ou de sucres hydrogénés et de réactifs polycarboxylés, tels que l'acide citrique,
- à base d'aminoamides obtenus par réaction d'anhydrides carboxyliques et d'alkanolamines.

Le liant est de préférence exempt de formaldéhyde et comprend avantageusement des réactifs biosourcés, renouvelables à court terme. Dans un mode de réalisation avantageux, la composition aqueuse de liant comprend plus de 50 % en poids sec de réactifs biosourcés.

Ces réactifs biosourcés sont choisis par exemple parmi les saccharides et les produits d'hydrogénation de saccharides. Les compositions aqueuses de liant contiennent en outre un agent de réticulation qui est typiquement un acide polycarboxylique, de préférence l'acide citrique. La réaction entre les saccharides et produits d'hydrogénation de saccharides et l'acide polycarboxylique est avantageusement catalysée par un catalyseur, notamment par l'hypophosphite de sodium (HPS).

Les systèmes de liants thermodurcissables pour laine minérale à base de saccharides réducteurs, saccharides non-réducteurs et/ou sucres hydrogénés et d'acides polycarboxyliques sont décrits en détail dans les demandes internationales WO2009/080938, WO2010/029266, WO2013/014399, WO2013/021112 et WO2015/132518 au nom de la Demanderesse.

A la connaissance de la Demanderesse le produit intermédiaire obtenu à l'issue de l'étape (c) du procédé de l'invention, c'est-à-dire la laine minérale thermodurcissable formée de fibres minérales entourées d'une couche organique sèche et thermodurcissable, en équilibre thermique avec leur environnement, n'a jusqu'ici pas été décrit dans l'état de la technique.

La présente demande a par conséquent également pour objet de la laine minérale thermodurcissable en vrac contenant des fibres minérales liantes entourées d'une couche sèche de liant organique thermodurcissable et, éventuellement, des fibres non-liantes. Cette laine minérale est en vrac, c'est-à-dire elle est constituée de fibres individuelles qui peuvent être entremêlées, mais qui n'adhèrent pas les unes aux autres de manière à former un matelas de fibres.

Cette laine minérale thermodurcissable n'est pas poisseuse car la couche de liant organique à la surface des fibres ne contient pas d'eau et n'est donc pas une composition aqueuse visqueuse d'un liant organique.

Par ailleurs, cette laine minérale thermodurcissable est en équilibre thermique avec son environnement, c'est-à-dire elle n'est pas en cours de refroidissement (par exemple après fibrage) ou en cours de chauffage (par exemple dans l'étuve).

La laine minérale thermodurcissable de la présente invention est un produit intermédiaire stable qui peut être stocké, transporté et transformé dans des conditions ambiantes de température et d'humidité relative.

Elle peut être constituée uniquement de fibres liantes (fibres minérales entourées d'une couche de liant organique thermodurcissable) ou bien contenir à la fois des fibres liantes et des fibres non-liantes. Dans ce dernier cas les fibres non-liantes sont avantageusement choisies parmi les fibres de laine minérale vierge et/ou les fibres de laine minérale recyclée et/ou les fibres organiques naturelles, telles que définies et décrites ci-dessus.

Lorsque la laine minérale thermodurcissable en vrac de la présente invention est un mélange de fibres liantes et de fibres non-liantes elle comprend généralement de 10 à 400 parts en poids, de préférence de 20 à 300 parts en poids, en particulier de 30 à 200 parts en poids de laine minérale vierge et/ou recyclée (laine minérale non-liante) ou de fibres organiques naturelles pour 100 parts en poids de laine minérale thermodurcissable.

## Revendications

1. Procédé de fabrication de produits d'isolation à base de laine minérale liée par un liant organique, comprenant les étapes successives suivantes :
(a) la mise à disposition de laine minérale à température ambiante,
(b) l'application, sur la laine minérale, d'une composition aqueuse de liant thermodurcissable,
(c) le séchage de la laine minérale imprégnée de composition aqueuse de liant thermodurcissable de manière à obtenir de la laine minérale thermodurcissable,
(d) la mise en forme de la laine minérale thermodurcissable, et
(e) le chauffage de la laine minérale thermodurcissable mise en forme à une température et pendant une durée suffisante pour permettre la condensation des constituants du liant et la formation d'un liant insoluble.

2. Procédé selon la revendication 1, **caractérisé par le fait que** la laine minérale mise à disposition à l'étape (a) est de la laine minérale vierge ou de la laine minérale recyclée, ou un mélange de laine minérale vierge et de laine minérale recyclée.

3. Procédé selon la revendication 1 ou 2, **caractérisé par le fait qu'**au cours de l'étape d'application de la composition aqueuse de liant la laine minérale est à température ambiante.

4. Procédé selon l'une quelconque des revendications précédentes, **caractérisé par le fait qu'**il comporte en outre, entre l'étape (c) et l'étape (d), une étape de mélange de la laine minérale thermodurcissable avec de la laine minérale vierge et/ou avec de la laine minérale recyclée et/ou avec des fibres organiques naturelles.

5. Procédé selon la revendication 4, **caractérisé par le fait que** les fibres organiques naturelles sont des fibres végétales, de préférence choisies dans le groupe constitué de fibres lignocellulosiques et de coton, ou des fibres animales choisies de préférence dans le groupe constitué des laines animales.

6. Procédé selon la revendication 4 ou 5, **caractérisé par le fait que** l'on mélange 100 parts en poids de laine minérale thermodurcissable avec 10 à 400 parts en poids, de préférence avec 20 à 300 parts en poids, en particulier avec 30 à 200 parts de laine minérale vierge et/ou de laine minérale recyclée et/ou de fibres organiques naturelles.

7. Procédé selon l'une quelconque des revendications précédentes, **caractérisé par le fait que** le séchage de laine minérale imprégnée de composition aqueuse de liant (étape (c)) est réalisé par chauffage à une température comprise entre 60 et 110 °C, de préférence entre 70 et 100 °C.

8. Procédé selon l'une quelconque des revendications précédentes, **caractérisé par le fait que** la laine minérale thermodurcissable comprend de 3 à 20 % en poids sec, de préférence de 4 à 18 % en poids sec, en particulier de 5 à 15 % en poids sec, de liant thermodurcissable.

9. Procédé selon l'une quelconque des revendications précédentes, **caractérisé par le fait que** les produits d'isolation obtenus à l'étape (e) ont une masse volumique comprise entre 4 et 150 kg/m³, de préférence entre 5 et 60 kg/m³, en particulier entre 6 et 40 kg/m³.

10. Procédé selon l'une quelconque des revendications précédentes, **caractérisé par le fait que** les produits d'isolation obtenus à l'étape (e) ont une épaisseur comprise entre 20 mm et 500 mm, de préférence entre 50 mm et 200 mm, en particulier entre 60 mm et 150 mm.

11. Procédé selon l'une quelconque des revendications précédentes, **caractérisé par le fait que** la composition aqueuse de liant comprend plus de 50 % en poids sec de réactifs biosourcés.

12. Procédé selon l'une quelconque des revendications précédentes, **caractérisé par le fait que** les réactifs biosourcés sont choisis parmi les saccharides et les produits d'hydrogénation de saccharides.

13. Procédé selon l'une quelconque des revendications précédentes, **caractérisé par le fait que** l'étape (d) de mise en forme de la laine minérale thermodurcissable est réalisée par moulage et/ou compression de la laine minérale thermodurcissable.

14. Procédé selon l'une quelconque des revendications précédentes, **caractérisé par le fait que** la température de chauffage de l'étape (e) est comprise entre 130 °C et 240 °C, de préférence entre 180 °C et 230 °C.

15. Laine minérale thermodurcissable en vrac contenant des fibres minérales liantes entourées d'une couche sèche de liant organique thermodurcissable et, éventuellement, des fibres non-liantes.

16. Laine minérale thermodurcissable en vrac selon la revendication 15, dans laquelle les fibres non-liantes sont choisies parmi les fibres de laine minérale vierge et/ou les fibres de laine minérale recyclée et/ou les fibres organiques naturelles.

## Patentansprüche

1. Verfahren zum Herstellen von Isolierprodukten auf Basis von Mineralwolle, die durch ein organisches Bindemittel gebunden ist, umfassend die folgenden aufeinanderfolgenden Schritte:
(a) Bereitstellen von Mineralwolle bei Umgebungstemperatur,
(b) Aufbringen, auf die Mineralwolle, einer wässrigen Zusammensetzung aus warmhärtbarem Bindemittel,
(c) Trocknen der Mineralwolle, die mit der wässrigen Zusammensetzung aus warmhärtbarem Bindemittel getränkt ist, um warmhärtbare Mineralwolle zu erhalten,
(d) Formen der warmhärtbaren Mineralwolle, und
(e) Erhitzen der geformten warmhärtbaren Mineralwolle auf eine Temperatur und während einer Dauer, die zum Ermöglichen der Kondensation der Bestandteile des Bindemittels und der Ausbildung eines unlöslichen Bindemittels ausreicht.

2. Verfahren nach Anspruch 1, **dadurch gekennzeichnet, dass** die Mineralwolle, die in Schritt (a) bereitgestellt wird, unberührte Mineralwolle oder recycelte Mineralwolle oder eine Mischung aus unberührter Mineralwolle und recycelter Mineralwolle ist.

3. Verfahren nach Anspruch 1 oder 2, **dadurch gekennzeichnet, dass** im Laufe des Schritts des Aufbringens der wässrigen Bindemittelzusammensetzung die Mineralwolle bei Umgebungstemperatur ist.

4. Verfahren nach einem der vorstehenden Ansprüche,
**dadurch gekennzeichnet, dass** es ferner zwischen Schritt (c) und Schritt (d) einen Schritt eines Mischens der warmhärtbaren Mineralwolle mit unberührter Mineralwolle und/oder mit recycelter Mineralwolle und/oder mit natürlichen organischen Fasern umfasst.

5. Verfahren nach Anspruch 4, **dadurch gekennzeichnet, dass** die natürlichen organischen Fasern Pflanzenfasern, die vorzugsweise aus der Gruppe ausgewählt sind, bestehend aus Lignocellulosefasern und Baumwolle, oder tierische Fasern sind, die vorzugsweise aus der Gruppe ausgewählt sind, bestehend aus tierischen Wollen.

6. Verfahren nach Anspruch 4 oder 5, **dadurch gekennzeichnet, dass** 100 Gewichtsteile der warmhärtbaren Mineralwolle mit 10 bis 400 Gewichtsteilen, vorzugsweise mit 20 bis 300 Gewichtsteilen, insbesondere mit 30 bis 200 Gewichtsteilen der unberührten Mineralwolle und oder der recycelten Mineralwolle und/oder der natürlichen organischen Fasern gemischt werden.

7. Verfahren nach einem der vorstehenden Ansprüche,
**dadurch gekennzeichnet, dass** das Trocknen der getränkten Mineralwolle mit der wässrigen Bindemittelzusammensetzung (Schritt (c)) durch das Erhitzen auf eine Temperatur zwischen 60 und 110 °C, vorzugsweise zwischen 70 und 100 °C erfolgt.

8. Verfahren nach einem der vorstehenden Ansprüche,
**dadurch gekennzeichnet, dass** die warmhärtbare Mineralwolle zu 3 bis 20 % des Trockengewichts, vorzugsweise zu 4 bis 18 % des Trockengewichts und insbesondere zu 5 bis 15 % des Trockengewichts das warmhärtbare Bindemittel umfasst.

9. Verfahren nach einem der vorstehenden Ansprüche,
**dadurch gekennzeichnet, dass** die Isolierprodukte, die in Schritt (e) erhalten werden, eine Dichte zwischen 4 und 150 kg/m³, vorzugsweise zwischen 5 und 60 kg/m³, insbesondere zwischen 6 und 40 kg/m³ besitzen.

10. Verfahren nach einem der vorstehenden Ansprüche,
**dadurch gekennzeichnet, dass** die Isolierprodukte, die in Schritt (e) erhalten werden, eine Dicke zwischen 20 mm und 500 mm, vorzugsweise zwischen 50 mm und 200 mm, insbesondere zwischen 60 mm und 150 mm besitzen.

11. Verfahren nach einem der vorstehenden Ansprüche,
**dadurch gekennzeichnet, dass** die wässrige Bindemittelzusammensetzung zu mehr als 50 % des Trockengewichts biobasierte Reaktanten umfasst.

12. Verfahren nach einem der vorstehenden Ansprüche,
**dadurch gekennzeichnet, dass** die biobasierten Reaktanten aus Sacchariden und Hydrierungsprodukten von Sacchariden ausgewählt sind.

13. Verfahren nach einem der vorstehenden Ansprüche,
**dadurch gekennzeichnet, dass** Schritt (d) des Formens der warmhärtbaren Mineralwolle durch Abformen und/oder Pressen der warmhärtbaren Mineralwolle erfolgt.

14. Verfahren nach einem der vorstehenden Ansprüche,
**dadurch gekennzeichnet, dass** die Erhitzungstemperatur von Schritt (e) zwischen 130 °C und 240 °C, vorzugsweise zwischen 180 °C und 230 °C liegt.

15. Lose warmhärtbare Mineralwolle, die bindende Mineralfasern, die von einer trockenen Schicht aus warmhärtbarem organischem Bindemittel umgeben sind, und optional nicht bindende Fasern enthält.

16. Lose warmhärtbare Mineralwolle nach Anspruch 15, wobei die nicht bindenden Fasern aus Fasern von unberührter Mineralwolle und/oder Fasern von recycelter Mineralwolle und/oder natürlichen organischen Fasern ausgewählt sind.

## Claims

1. A method for manufacturing insulation products based on mineral wool bound by an organic binder, comprising the following successive steps:
(a) providing mineral wool at room temperature,
(b) applying, to the mineral wool, an aqueous thermosetting binder composition,
(c) drying the mineral wool impregnated with the aqueous thermosetting binder composition to obtain thermosetting mineral wool,
(d) shaping the thermosetting mineral wool, and
(e) heating the shaped thermosetting mineral wool at a temperature for long enough to enable the constituents of the binder to be condensed and an insoluble binder to be formed.

2. The method according to claim 1, **characterized in that** the mineral wool provided in step (a) is virgin mineral wool or recycled mineral wool, or a blend of virgin mineral wool and recycled mineral wool.

3. The method according to claim 1 or 2, **characterized in that** during the step of applying the aqueous binder composition the mineral wool is at room temperature.

4. The method according to any one of the preceding claims, **characterized in that** it further comprises, between step (c) and step (d), a step of blending the thermosetting mineral wool with virgin mineral wool and/or with recycled mineral wool and/or with natural organic fibers.

5. The method according to claim 4, **characterized in that** the natural organic fibers are plant fibers, preferably selected from the group consisting of lignocellulosic fibers and cotton, or animal fibers selected preferably from the group consisting of animal wools.

6. The method according to claim 4 or 5, **characterized in that** 100 parts by weight of thermosetting mineral wool is blended with 10 to 400 parts by weight, preferably with 20 to 300 parts by weight, in particular with 30 to 200 parts of virgin mineral wool and/or recycled mineral wool and/or natural organic fibers.

7. The method according to any one of the preceding claims, **characterized in that** the drying of mineral wool impregnated with aqueous binder composition (step (c)) is carried out by heating to a temperature comprised between 60 and 110°C, preferably between 70 and 100°C.

8. The method according to any one of the preceding claims, **characterized in that** the thermosetting mineral wool comprises 3 to 20% by dry weight, preferably from 4 to 18% by dry weight, in particular from 5 to 15% by dry weight, of thermosetting binder.

9. The method according to any one of the preceding claims, **characterized in that** the insulation products obtained in step (e) have a density comprised between 4 and 150 kg/m³, preferably between 5 and 60 kg/m³, in particular between 6 and 40 kg/m³.

10. The method according to any one of the preceding claims, **characterized in that** the insulation products obtained in step (e) have a thickness comprised between 20 mm and 500 mm, preferably between 50 mm and 200 mm, in particular between 60 mm and 150 mm.

11. The method according to any one of the preceding claims, **characterized in that** the aqueous binder composition comprises more than 50% by dry weight of biosourced reagents.

12. The method according to any one of the preceding claims, **characterized in that** the biosourced reagents are selected from saccharides and saccharide hydrogenation products.

13. The method according to any one of the preceding claims, **characterized in that** step (d) of shaping the thermosetting mineral wool is carried out by molding and/or compressing the thermosetting mineral wool.

14. The method according to any one of the preceding claims, **characterized in that** the heating temperature of step (e) is comprised between 130°C and 240°C, preferably between 180°C and 230°C.

15. A loose thermosetting mineral wool containing binding mineral fibers surrounded by a dry layer of thermosetting organic binder and, optionally, non-binding fibers.

16. The loose thermosetting mineral wool according to claim 15, wherein the non-binding fibers are selected from fibers of virgin mineral wool and/or fibers of recycled mineral wool and/or natural organic fibers.
